(19) Europäisches Patentamt
European Patent Office
Office européen des brevets

(11) Publication number: 0 177 092
A2

(12) # EUROPEAN PATENT APPLICATION

(21) Application number: 85201502.3

(22) Date of filing: 19.09.85

(51) Int. Cl.[4]: C 04 B 35/58
//C25C3/08

(30) Priority: 24.09.84 US 653159

(43) Date of publication of application:
09.04.86 Bulletin 86/15

(84) Designated Contracting States:
BE CH DE FR GB LI NL

(71) Applicant: CABOT CORPORATION
125 High Street
Boston, Massachusetts 02110(US)

(72) Inventor: Lidman, William G.
354 Pennsylvania Avenue
Shillington Pennsylvania(US)

(74) Representative: Attfield, Donald James et al,
BROOKES, MARTIN & WILSON Prudential Buildings 5 St. Philip's Place
Birmingham B3 2AF(GB)

(54) **Reaction-bonded shapes of titanium diboride.**

(57) Titanium diboride shaped articles for use in aluminum reduction cells are produced by reaction – bonding a shaped mixture of titanium dioxide, boron carbide and carbon, or titanium dioxide, boron oxide and carbon by heating a mixutre of the reactants to a temperature in the range 2100 – 2300 °C under vacuum or argon. The carbon may be in the form of a carbon black and when boron carbide is used it is present in a 7 – 12% stoichiometric excess with a 3 – 9% stoichiometric deficiency of carbon.

EP 0 177 092 A2

0177092

# REACTION - BONDED SHAPES OF TITANIUM DIBORIDE

Aluminum metal has long been produced in electrolytic cells by the electrolysis of alumina in a molten cryolite salt electrolyte bath. Conventional Hall-Heroult electrolytic cells are shallow vessels with the floor forming the cathode and the anode being a block suspended in the bath. During operation of the cell, only about 25% of the electrical current consumed is directed to the actual reduction of the alumina to aluminum; about 40% of the electricity is consumed by the voltage drop caused by the resistance of the bath. Movement of the molten aluminum due to strong magnetohydrodynamic influences and other effects leads to a variable surface of the aluminum pool and thereby imposes a minimum anode-cathode spacing of about 4 to 6 cm.

Shaped articles of titanium diboride have been employed as current conducting elements in such electrolytic cells. Refractory hard metals, such as titanium diboride, are hard, dense materials with high melting points, and generally feature low solubility and resistance to corrosion by most acids and alkalis. These materials additionally exhibit high electrical conductivity, due to their metallic structure. Consequently, such materials have become popular candidates for use as electrodes in molten salt electrolysis processes where their durability (corrosion resistance) and conductivity are essential properties for economic performance. However, these materials also have unfavorable properties which limit their utility. Not only are the materials expensive to

produce and fabricate into useful articles, but the fabricated articles usually suffer from brittleness and have little resistance to thermal shock.

It is well known that the presence of impurities and second phases (such as boron carbide, titanium carbide, and remnants of titanium oxides) in the titanium diboride shapes are a likely cause of premature cracking or excessive corrosion of the shaped articles. This degradation renders the articles unsuitable for use. Many of these detrimental impurities are introduced during the milling operation which is necessary in order to reduce the particle size of the titanium diboride in order to effect sufficient surface energy to support the sintering action for densification and grain growth. Additional impurity and second phase contamination can be attributed to the use of binders in order to provide integrity and strength to the green pressed material, and also the inclusion of sintering aids in order to assist during the high temperature sintering process.

Now, according to the present invention, a method for producing novel, shaped titanium diboride articles has been discovered.

It has been found that durable, high purity titanium diboride ($TiB_2$) shapes can be produced by a method involving the reaction-bonding of a mixture of a titanium material, a boron material, and carbon. Preferably, the reactants comprise a mixture of titanium dioxide ($TiO_2$), boron carbide ($B_4C$), carbon (C). These materials are thoroughly mixed, formed into desired shapes, and then reacted in-situ and sintered at a temperature greater than about 2100 degrees C (about 2373 degrees K) to form a shaped $TiB_2$ product according to the following reaction:

(A) $2TiO_2 + B_4C + 3C \longrightarrow 2\ TiB_2 + 4CO$

It has been found that in order to minimize undesireable phases in the $TiB_2$ product the reactants should be used in proportions slightly modified from stoichiometric. Accordingly, it is preferred to include a greater than stoichiometric amount of boron carbide in order to provide excess boron ranging from about 7 to about 12 percent, and a less than stoichiometric amount of carbon so as to provide a deficiency of carbon ranging from about 3 to about 9 percent.

Other reactants may be substituted in place of the above-listed reactants. For example, elemental titanium or boron or other Ti or B compounds can be used. Various sources of carbon also may be employed. Carbon black is the preferred form of carbon, but graphite and other sources may be used. A suitable binder material (such as carbowaxes or methyl cellulose) also may be added to enhance the integrity of the green, shaped articles.

In an exemplification of such an alternative reaction, boron oxide can be substituted as a starting component in place of boron carbide as illustrated by the following equation:

(B) $TiO_2 + B_2O_3 + 5C \longrightarrow TiB_2 + 5CO$

However, in order to achieve a $TiB_2$ product featuring a desired density of about 2.5 to about 4.5 g/cc (about 2.5 X $10^3$ to about 4.5 X $10^3$ $kg/m^3$), it has been found preferable to use the reactants defined by equation (A) above. A density of about 2.7 to about 4.2 g/cc (about 2.7 X $10^3$ to about 4.2 X $10^3$ $kg/m^3$) is particularly preferred.

The reactants are thoroughly mixed, shaped into an article of desired shape, and then heated to a temperature above about 2100 degrees C (about 2373 degrees K). Mixing may be accomplished using any conventional equipment, such as V-blenders, sigma blenders, ball mills, and other such

types of mixing or tumbling devices. Any conventional equipment for shaping the reactants can be employed. The choice of equipment generally depends on the shape desired to be formed. For example, in forming spherical shapes, the reactant powder typically can be agglomerated using a ball mill or disc pelletizer, or consolidated by applying pressure to powder contained in a shaped die. A reaction temperature in the range of about 2100 degrees C to about 2300 degrees C (about 2373 degrees K to about 2573 degrees K) is preferred. The reaction should be conducted under conditions of vacuum or under an inert atmosphere in order to avoid the oxidation of the carbon present to CO or $CO_2$. Vacuum or an atmosphere of argon are preferred conditions.

The following examples are provided to further illustrate the invention. The examples are intended to be illustrative in nature and are not to be construed as limiting the scope of the invention.

## EXAMPLE 1

1,428 grams (1.428 kg) of titanium dioxide powder (analyzing 99 percent pure), 558 grams ($5.58 \times 10^{-1}$ kg) of boron carbide powder (analyzing 75.2 percent boron, 20.9 percent carbon), and 284 grams ($2.84 \times 10^{-1}$ kg) of carbon black (analyzing 97.8 percent pure) were thoroughly mixed in a Patterson-Kelley twin shell blender. The reactant proportions employed provided a greater than stoichiometric amount of boron carbide (9.8 percent excess of boron) and a less than a stoichiometric amount of carbon black (6.6 percent deficiency of carbon). The reactants were dry and wet blended with 45 grams ($4.5 \times 10^{-2}$ kg) of methylcellulose binder. The wetted mixture was oven-dried at 90 degrees C (363 degrees K), and the dry cake was disc - milled to minus 20 mesh to provide an agglomerated feed for pressing. The agglomerated reactant mixture was

pressed into cylindrical shapes, reacted and sintered at 2200 degrees C (2473 degrees K) for 120 minutes ($7.2 \times 10^3$ seconds) in an inert argon atmosphere [600 mm Hg ($8.0 \times 10^4$ Pa) pressure]. The in-situ reaction to form titanium diboride and the sintering thereof occurred in a single furnacing step. The density of the $TiB_2$ cylindrical pellet found was 3.5 grams per cubic centimeter ($3.5 \times 10^3$ kg/m$^3$). The $TiB_2$ was analyzed to have a carbon content of 4200 ppm and an oxygen content of 900 ppm.

EXAMPLE II

A reaction mixture of titanium dioxide, boron carbide and carbon black was prepared using the same ingredients, proportions, and technique as described in Example 1 above. The reaction, however, was conducted under vacuum [about 75 microns (about 10 Pa)] rather than an inert gas atmosphere. The $TiB_2$ product was analyzed to have a carbon content of 950 ppm and an oxygen content of 900 ppm.

EXAMPLE III

363.7 pounds ($1.649 \times 10^2$ kg) of titanium dioxide powder (analyzing 99% pure), 138.9 pounds (62.9 kg) of boron carbide powder (77.3% boron, 21.4% carbon), and 72.4 pounds (32.8 kg) of carbon black (analyzing 97.8% pure) were thoroughly mixed in a Patterson-Kelley twin shell blender. The reactants were dry blended with 5.2 weight % methylcellulose binder. The bindered blend was then wet blended with 28 weight % water, 2.2 weight % glycerine, and 0.5 weight % boric acid. The wetted mix was extruded into 0.375" ($9.5 \times 10^3$ m) diameter rods. The extruded rods were oven-dried at 250 degrees C (523 degrees K) and jaw crushed to -30 mesh. The agglomerated mix was dry blended

with 1 weight % Acrowax C, which is a die wall lubricant. The agglomerated mix was pressed into spheres approximately 1" ($2.54 \times 10^{-2}$ m) in diameter using a double acting punch press. The pressed spheres were debindered at approximately 750 degrees C (1023 degrees K) using a resistance-heated vacuum furnace. The spheres were then reacted and sintered at 2250 degrees C (2523 degrees K) for 120 minutes ($7.2 \times 10^{3}$ seconds) under vacuum. The in-situ reaction to form titanium diboride and the sintering thereof occurred in a single furnacing step. The density of the $TiB_2$ spheres was approximately 3.6 grams per cubic centimeter ($3.6 \times 10^{-3}$ kg/$m^3$). The $TiB_2$ was analyzed to have a carbon content of 300-1800 ppm and an oxygen content of 700-1400 ppm.

## EXAMPLE IV

513 grams ($5.13 \times 10^{-1}$ kg) of titanium dioxide powder (analyzing 99 % pure), 822 grams ($8.22 \times 10^{-1}$ kg) of boric acid powder, and 386 grams ($3.86 \times 10^{-1}$ kg) of carbon black (analyzing 97.8 percent pure) were thoroughly mixed in a Patterson-Kelly twin shell blender. The reactant proportions provided a greater than stoichimetric amount of boron oxide (5 % excess boron) and a less than stoichiometric amount of carbon black (0.5 % deficiency of carbon). 100 grams ($1.00 \times 10^{-1}$ kg) of the reactant blend were dry and wet blended with 2 grams ($2.0 \times 10^{-3}$ kg) of methylcellulose. The wetted mixture was oven-dried at 100 degrees C (373 degrees K), and the dry cake was crushed to minus 40 mesh to provide an agglomerated feed for pressing. The agglomerated reactant mixture was blended with 1 gram ($1.0 \times 10^{-3}$ kg) of Acrowax, pressed into cylindrical shapes, reacted, and sintered at 2200 degrees C (2473 degrees K) for 120 minutes ($7.2 \times 10^{3}$ seconds) under vacuum

[approximately 100 microns (approx. 13.2 Pa)]. The density of the $TiB_2$ cylindrical pellet formed was 1.3 grams per cubic centimeter ($1.3 \times 10^{-3} kg/m^3$). The $TiB_2$ was analyzed to have a carbon content of 1905 ppm and an oxygen content of 1100 ppm.

The method of the invention may also be defined as making a shaped refractory article of a group IV b, V b or VI b metal boride, or a refractory shaped composite of an inert particulate material in matrix of the metal boride, which method comprises forming a uniformly mixed body of reactants containing the said metal as an oxide sub-oxide. borate or carbide, boron as an element, oxide or carbide. and if necessary carbon in the stoichiometric proportions desired to form the desired metal boride, boron suboxides and carbon monoxide, forming the reaction mixture optionally together with an inert particulate material into a shaped compact, and heating the shaped compact in an inert atmosphere to form a reaction sintered product.

The metal is preferably $TiB_2$ and the uniformity mixed body of reactants heated to a temperature of at least 1300°C for a time sufficient to complete formation of the $TiB_2$ and evolution of Co.

CLAIMS:

1. A process for the production of titanium diboride shapes characterised in that it comprises: preparing a mixture of titanium material, boron material and carbon; forming said mixture into desired shapes; and reacting and sintering said shapes at a temperature above 2100 degrees C so as to form in-situ a shaped, sintered, titanium diboride product.

2. The process of Claim 1 characterised in that the reactions comprise titanium oxide, boron carbide, and carbon.

3. The process of Claim 1 characterised in that the reactants comprise titanium oxide, boron oxide, and carbon.

4. The process of Claim 2 or 3 characterised in that said carbon reactant is carbon black.

5. The process of Claim 2 characterised in that said reactants are used in proportions so as to provide a greater than stoichiometric amount of boron carbide, ranging from 7 to 12 percent excess boron, and a less than stoichiometric amount of carbon, ranging from 3 to 9 percent deficient carbon.

6. The process of any one of Claims 1 - 5 characterised in that the reaction and sintering is conducted at a temperature ranging from 2100 to 2300 degrees C.

7. The process of any one of Claims 1 - 6 wherein the reaction is conducted under a vacuum.

8. The process of any one of Claims 1 - 6 wherein the reaction is conducted under an argon atmosphere.

9. A titanium diboride article characterised in that it comprises a reaction-bonded titanium diboride shape formed by in-situ reaction and sintering of a mixture of titanium material, boron material, and carbon.

10. A titanium diboride article characterised in that it comprises a reaction-bonded titanium diboride shape formed by in-situ reaction and sintering of titanium dioxide, boron carbide, and carbon at a temperature above about 2100 degree C.